# FASCICULE DE BREVET EUROPEEN

(11) **EP 1 046 023 B1**
(45) Date de publication et mention de la délivrance du brevet: **24.07.2002**
(21) Numéro de dépôt: 98964547.8
(22) Date de dépôt: 29.12.1998
(51) Int. Cl.: G01J 3/06, G02B 7/00

(54) **DISPOSITIF DE RATTRAPAGE DE JEU ANGULAIRE**
VORRICHTUNG ZUR AUFNAHME VON DREH-SPIEL
DEVICE FOR ADJUSTING ANGULAR PLAY

(30) Priorité: 06.01.1998 FR 9800058
(43) Date de publication de la demande: 25.10.2000
(73) Titulaire: Jobin Yvon S.A., 91160 Longjumeau (FR)
(72) Inventeur: ANDRIEU, Philippe, F-75010 Paris (FR); THEVENON, Alain, F-91220 Bretigny sur Orge (FR)
(74) Mandataire: Michelet, Alain
(86) Numéro de dépôt international: FR9802910
(87) Numéro de publication internationale: WO9935472

(56) Documents cités:
- EP-A- 0 124 448
- T.M. NIEMCZYK ET G.W. GOBELI: "Characteristics of a Direct Grating Drive" APPLIED SPECTROSCOPY, vol. 42, no. 5, juillet 1988, pages 792-796, XP002074292

## Description

La présente invention se rapporte à un dispositif de rattrapage de jeu angulaire sur une plage angulaire déterminée d'un organe optique mobile en rotation par rapport à un bâti. Elle est notamment applicable à l'entraînement d'un réseau de diffraction dans un système monochromateur.

On connaît divers mécanismes permettant d'entraîner et de positionner en rotation un organe optique mobile, tels que les barres sinus. Généralement, la plage angulaire utile pour le positionnement en rotation est limitée. Pour un réseau de diffraction, notamment, elle est habituellement comprise entre 5° et 60°. Il est intéressant, pour contrôler l'orientation de l'organe optique dans cette plage angulaire, d'avoir recours à un moteur pas à pas, associé à un rapport de réduction, de manière à augmenter le nombre de points sur la plage angulaire déterminée. Par exemple, alors qu'un moteur pas à pas offre quelques dizaines à environ 400 points par tour, le rapport de réduction permet de couvrir 1000 points sur 30°. Un exemple d'un dispositif de rattrapage de jeu angulaire connu est divulgué dans le document EP-A-0 124 448.

L'entraînement de l'organe optique mobile entraîne cependant des jeux de transmission qui sont encore accentués en présence d'un rapport de réduction important. Afin d'obtenir un positionnement précis, il est donc nécessaire de compenser ces jeux. Un dispositif de rattrapage de jeu angulaire connu pour un système monochromateur dans lequel le réseau de diffraction est porté par une équerre, comporte un ressort de traction monté sur l'équerre. Ce dispositif ne permet qu'une rotation limitée du réseau autour de son axe de rotation, à cause de l'enroulement du ressort autour de cet axe, et un microrupteur doit être mis en place pour éviter une détérioration du dispositif en cas de fausse manipulation.

Ce dispositif présente l'inconvénient d'avoir une transmission mécanique limitée en course angulaire. De plus, le microrupteur est nécessaire pour sécuriser le mécanisme et entraîne une augmentation de coût. Un autre inconvénient de ce dispositif est que le ressort applique sur l'équerre un couple qui varie sensiblement dans la plage angulaire de mesure, ce qui porte préjudice à la qualité du rattrapage de jeu.

La présente invention a pour objet un dispositif de rattrapage de jeu angulaire sur une plage angulaire déterminée qui permet une transmission mécanique non limitée en course angulaire. Ce dispositif permet donc de se passer d'un microrupteur.

L'invention concerne un tel dispositif pouvant sécuriser la transmission, de manière économique et sans risque de détérioration.

Le dispositif selon l'invention rend aussi possible l'obtention d'un couple antagoniste au couple d'entraînement ayant une faible variation sur l'ensemble de la plage angulaire déterminée.

A cet effet, l'invention s'applique à un dispositif de rattrapage de jeu angulaire sur une plage angulaire déterminée d'un organe optique mobile en rotation par rapport à un bâti.

Selon l'invention, le dispositif comprend :
- une pièce de contact solidaire de cet organe, et
- un bras de rappel élastique ayant deux extrémités.

Une première de ces extrémités est fixée au bâti. La seconde extrémité coopère avec la pièce de contact lorsque l'organe mobile est orienté dans la plage angulaire, au moins lorsque l'organe mobile pénètre dans cette plage angulaire dans un sens actif de rotation, de telle sorte que le bras de rappel exerce sur l'organe mobile un couple antagoniste. Cette seconde extrémité ne coopère pas avec la pièce de contact lorsque l'organe mobile est orienté en dehors de cette plage angulaire.

Avantageusement, l'organe optique mobile en rotation est un réseau de diffraction d'un monochromateur, porté par une équerre mobile en rotation autour d'un axe.

La plage angulaire a une ouverture avantageusement comprise entre 5° et 60°.

L'orientation de l'organe mobile est préférentiellement définie au moyen d'un axe de référence solidaire de l'organe mobile et tournant avec lui autour de l'axe de rotation de l'organe. L'organe mobile est alors « orienté » dans la plage angulaire lorsque l'axe mobile est dans cette plage angulaire.

Le dispositif de l'invention permet d'exercer un couple antagoniste de manière sélective sur la plage angulaire déterminée et de laisser l'organe mobile tourner librement autour de son axe de rotation en dehors de cette plage, grâce à la coopération de la pièce de contact et du bras de rappel. Ainsi, la transmission mécanique est illimitée en course angulaire et le rattrapage de jeu est effectué de manière fiable sur la plage angulaire.

Dans certains modes de réalisation, lorsque l'organe mobile est orienté en dehors de la plage angulaire et y pénètre, le rattrapage de jeu est automatiquement effectué, quel que soit le sens d'entrée de l'organe mobile dans la plage angulaire. Ainsi, dans une forme particulière de réalisation, la pièce de contact est disposée au milieu de l'organe mobile.

Dans d'autres modes de réalisation préférés, le rattrapage de jeu est enclenché de manière sélective selon le sens d'entrée de l'organe mobile dans la plage angulaire. Ainsi, le rattrapage de jeu peut être contrôlé de manière très fiable et très précise, car il n'est effectif que lorsque l'entrée dans la plage angulaire se fait dans le sens prévu.

Ainsi, préférentiellement, l'organe mobile a un sens inactif de rotation, la seconde extrémité ne coopérant pas avec la pièce de contact lorsque l'organe mobile pénètre dans la plage angulaire dans le sens inactif de rotation.

Une fois que le rattrapage de jeu est enclenché, l'organe mobile étant entré dans la plage angulaire selon le sens actif de rotation, le rattrapage de jeu se poursuit tant que l'organe mobile reste orienté dans la plage angulaire, quelles que soient ses rotations (et notamment leur sens) au sein de cette plage.

En revanche, lorsque l'organe mobile pénètre dans la plage angulaire dans le sens inactif de rotation, il est soumis à un couple antagoniste inexistant ou très faible, quelle que soit son orientation dans la plage angulaire.

Dans les modes de réalisation avec sens actif et inactif de rotation, le dispositif de rattrapage de jeu comporte avantageusement une butée d'armement destinée à bloquer le bras de rappel dans un sens de déplacement du bras correspondant au sens inactif de rotation de l'organe mobile, de telle sorte que le couple antagoniste est supérieur à une valeur de seuil dès que l'organe mobile pénètre dans la plage angulaire dans le sens actif de rotation.

Cette disposition favorise le maintien d'un couple antagoniste de faibles variations sur toute la plage angulaire, ce couple étant non nul dès l'entrée de l'organe mobile dans la plage angulaire.

Dans une forme préférée de réalisation du dispositif de rattrapage de jeu avec sens actif et inactif de rotation de l'organe mobile, le dispositif comporte une rampe d'escamotage solidaire de l'organe mobile et destinée à coopérer avec le bras de rappel lorsque l'organe mobile pénètre dans la plage angulaire dans le sens inactif de rotation, de manière à empêcher le bras de rappel de coopérer avec la pièce de contact, tout en donnant au couple antagoniste une valeur négligeable.

Par « rampe », on entend un élément incliné ayant une pente éventuellement variable selon une direction donnée.

La rampe d'escamotage permet d'éviter, dans le sens inactif, le contact entre l'organe mobile et le bras de rappel. Elle impose que le bras de rappel ait une élasticité non seulement dans un plan perpendiculaire à l'axe de rotation de l'organe mobile, mais aussi dans un plan correspondant au suivi de la rampe. Selon une forme particulière de réalisation dans laquelle la rampe se prolonge entre l'organe mobile et le bras de rappel, ces deux plans sont confondus.

La rampe d'escamotage et le bras de rappel sont tels que lorsque le bras de rappel échappe à la pièce de contact, après avoir dépassé la position extrême correspondant au sens actif de rotation, le bras de rappel revient en deçà de la rampe d'escamotage. Ainsi, le système d'escamotage est de nouveau prêt à fonctionner dans le cas d'une rotation de l'organe mobile dans le sens inactif.

Préférentiellement, la rampe d'escamotage est montante et se prolonge au-dessus de la pièce de contact.

Selon d'autres formes de réalisation, la rampe d'escamotage est descendante ou se prolonge entre la pièce de contact et le bras de rappel, en étant incurvée vers la pièce de contact. Dans une autre forme de réalisation, la pièce de contact est rigide lorsqu'elle entre en contact avec le bras de rappel dans le sens actif de rotation et elle est flexible lorsqu'elle entre en contact avec le bras de rappel dans le sens inactif de rotation.

Avantageusement, la pièce de contact et le bras de rappel sont tels que le couple antagoniste présente une faible variation relative sur la plage angulaire, préférentiellement inférieure à 25 %.

Les paramètres correspondant à la pièce de contact et au bras de rappel peuvent être optimisés pour obtenir une variation minimale. En effet, le couple antagoniste appliqué dépend notamment du bras de levier formé par le bras de rappel et la pièce de contact, ce bras de levier variant suivant la position de l'organe mobile dans la plage angulaire, ainsi que du couple de rappel exercé sur le bras de rappel.

Avantageusement, le bras de rappel est couplé par sa première extrémité à un ressort de torsion.

Le ressort de torsion exerce alors sur le bras de rappel un couple de rappel qui est distinct du couple antagoniste exercé par le bras de rappel sur l'organe mobile. Alors que le couple de rappel croît sensiblement avec l'angle de rappel dans la plage angulaire, la pièce de contact et le bras de rappel sont avantageusement tels que le couple antagoniste présente des variations de plus faible amplitude relative.

Le ressort de torsion étant formé d'un enroulement autour d'un axe, le bras de rappel est avantageusement une extrémité du ressort de torsion, mobile en rotation autour de cet axe.

Préférentiellement, le ressort de torsion comporte des spires jointives, ce qui permet de produire un rappel élastique automatique par l'empilement des spires.

Dans la forme de réalisation avec butée d'armement du bras de rappel, il est avantageux que cette butée d'armement serve en même temps de butée pour une extrémité de blocage du ressort de torsion. Dans un autre mode de réalisation avec ressort de torsion, le dispositif de rattrapage de jeu comporte deux butées : une pour le bras de rappel et une autre pour l'extrémité de blocage du ressort de torsion.

Dans un autre mode de réalisation, le bras de rappel est une lame élastique.

De manière préférée, la pièce de contact est un pion cylindrique. Ainsi, on obtient une bonne maîtrise du contact entre la pièce de contact et le bras de rappel.

Le bras de rappel est préférentiellement couplé à des moyens de rappel vertical.

Ce mode de réalisation est particulièrement intéressant en présence d'une rampe d'escamotage montante ou descendante. En effet, le bras de rappel subit alors des mouvements verticaux, en plus de ses mouvements de rotation horizontaux, et les moyens de rappel vertical permettent le retour du bras de rappel à sa position initiale en hauteur (avantageusement horizontale).

Ces moyens de rappel vertical comportent avantageusement un flasque comprenant au moins un élément élastique, monté sur la première extrémité du bras de rappel.

Selon une forme avantageuse de ce flasque, il comprend une rondelle élastique (par exemple ondulée ou conique) coopérant avec le bras de rappel, par exemple par l'intermédiaire d'une rondelle rigide.

Les dispositions, formes et caractéristiques de la présente invention ressortiront de la description détaillée d'un mode de réalisation particulier fait en regard des dessins annexés sur lesquels :

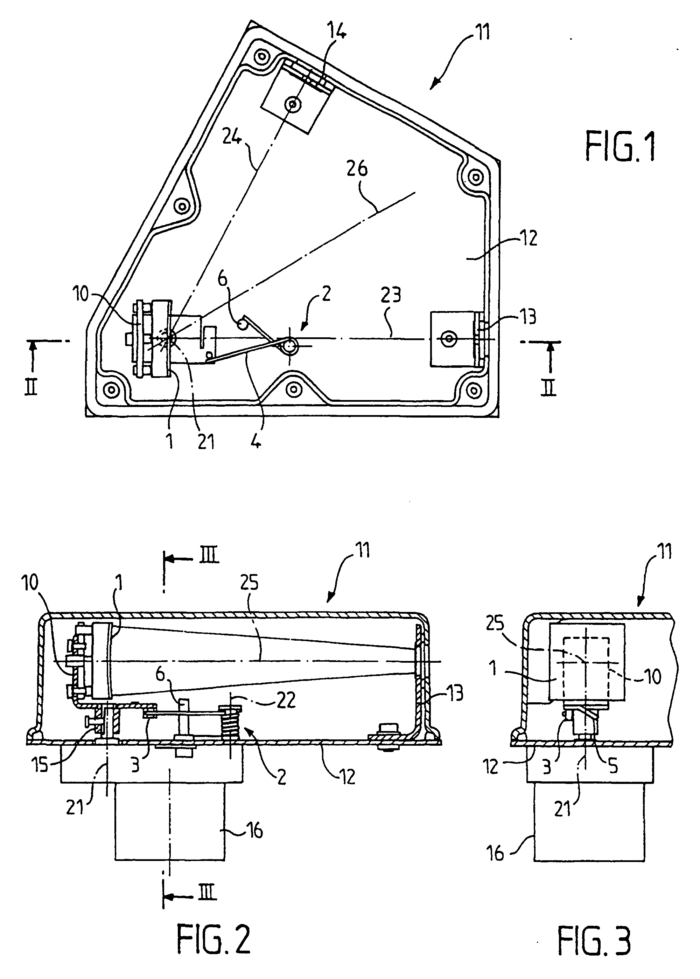

- la figure 1 représente un système monochromateur en vue de dessus, muni d'un dispositif de rattrapage de jeu angulaire selon l'invention ;
- la figure 2 montre le monochromateur de la figure 1 en vue latérale II-II ;
- la figure 3 montre le monochromateur des figures 1 et 2 en vue frontale partielle III-III ;
- la figure 4 représente en perspective le dispositif de rattrapage de jeu angulaire utilisé dans le monochromateur des figures 1 à 3 ;
- la figure 5 montre une partie du dispositif de rattrapage de jeu angulaire de la figure 4 en vue frontale V-V ;
- la figure 6 représente le dispositif de rattrapage de jeu angulaire des figures 4 et 5 en vue latérale ;
- la figure 7 montre en vue de dessus, le dispositif de rattrapage de jeu angulaire des figures 4 à 6, dans une première position proche de la position d'échappement du bras de rappel ;
- la figure 8 montre en vue de dessus, le dispositif de rattrapage de jeu angulaire des figures 4 à 6, dans une deuxième position correspondant à l'enclenchement du rattrapage de jeu angulaire ;
- la figure 9 montre en vue de dessus, le dispositif de rattrapage de jeu angulaire des figures 4 à 6, dans une troisième position correspondant à l'escamotage du dispositif de rattrapage de jeu ;
- la figure 10 montre des courbes de variation du couple de rappel exercé sur le bras de rappel et du couple antagoniste exercé par le bras de rappel sur le réseau de diffraction du monochromateur, en fonction de l'orientation angulaire du monochromateur.

Un système monochromateur 11 comprend un bâti 12 sur lequel sont fixées une entrée 13 d'un faisceau lumineux à mesurer et une sortie 14 d'un faisceau lumineux centré autour d'une longueur d'onde et issue du faisceau lumineux de mesure. Le monochromateur 11 comprend un réseau de diffraction porté par une équerre 10, mobile en rotation par un arbre 15 autour d'un axe 21 fixe par rapport au bâti 12. L'arbre 15 est entraîné en rotation par un moteur (non représenté) contenu dans un logement 16 disposé sous le bâti 12.

Le réseau 1 a une orientation angulaire définie par l'orientation d'un axe 25, sensiblement perpendiculaire à la surface du réseau 1 et passant par son centre optique.

Le faisceau d'entrée étant orienté selon un axe d'entrée 23 et le faisceau de sortie selon un axe de sortie 24, l'axe d'orientation 25 est préférentiellement compris entre un axe voisin de la bissectrice 26 des axes d'entrée 23 et de sortie 24 et une direction décalée angulairement par rapport à cette bissectrice 26, le réseau 1 étant tourné vers l'entrée 13. Le réseau 1 couvre ainsi une plage angulaire A avantageusement comprise entre 5° et 60° et par exemple égale à 40°.

En fonctionnement, un faisceau d'entrée polychromatique est envoyé par l'entrée 13, reçu par le réseau 1 et diffracté par ce réseau 1 dans différentes directions de l'espace. La sortie 14 permet de récupérer un faisceau de sortie à une longueur d'onde prédéterminée qui dépend de l'orientation du réseau 1.

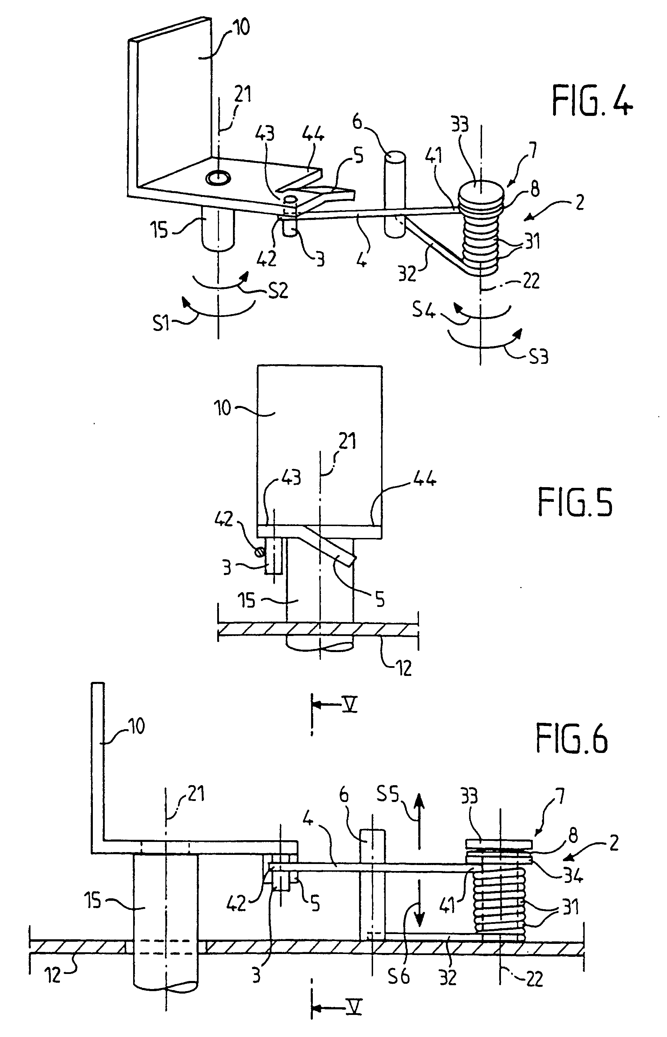

Le système monochromateur 1 est équipé d'un dispositif de rattrapage de jeu angulaire sur la plage angulaire A, plus particulièrement détaillé sur les figures 4 à 9. Ce dispositif comprend un ressort de torsion 2 formé de spires 31 jointives enroulées autour d'un axe 22 vertical (c'est-à-dire perpendiculaire au plan du bâti 12). Le ressort de torsion 2 a une première extrémité 32 de blocage qui est maintenue en position par contact contre une butée 6 verticale fixée au bâti 12. Elle a aussi une seconde extrémité 4 formant bras de rappel. Ce bras de rappel 4 est mobile en rotation autour de l'axe 22 du ressort 2. Il est couplé au ressort 2 par une première extrémité 41 et peut être mû en rotation par appui sur sa seconde extrémité 42. Préférentiellement, le bras de rappel 4 est armé en position initiale grâce à une butée d'armement. Avantageusement, cette butée est la butée 6, le bras de rappel 4 étant en appui contre la butée 6 en position initiale, d'un côté de la butée 6 opposé à l'extrémité 32 du ressort 2.

Le ressort 2 est coiffé d'un flasque 7 destiné à assurer des mouvements verticaux du bras de rappel 4 et son rappel vertical. Le flasque 7 comporte une rondelle élastique 8, disposée entre un épaulement 33 rigide et une rondelle rigide 34 placée sur le bras de rappel 4.

L'épaulement 33 peut être remplacé par tout autre moyen permettant de limiter le mouvement vers le haut de la rondelle élastique 8, tel qu'une vis.

Ainsi, le bras de rappel 4 est mobile en rotation autour de l'axe 22 du ressort 2, dans un premier sens S3 l'éloignant de la butée 6 et dans un second S4 orienté vers la butée 6, et il est mobile vers le haut (sens S5) et vers le bas (sens S6).

Le bras de rappel 4 est préférentiellement l'extrémité supérieure du ressort 2.

Le dispositif de rattrapage de jeu angulaire comporte également des éléments solidaires de l'équerre 10 porte-réseau. Ces éléments comprennent un pion 3 cylindrique destiné à appuyer contre l'extrémité 42 du bras de rappel 4. Ce pion 3 est préférentiellement vertical, et est fixé à l'équerre 10 inférieurement en un coin 43 opposé au réseau 1.

Le dispositif de rattrapage de jeu angulaire comprend également une rampe montante 5, disposée au bord de l'équerre 10 opposée au réseau 1, ce bord de l'équerre 10 étant délimité par le coin 43 et par un coin 44 opposé au coin 43. La rampe 5 débute au-dessous du niveau de l'équerre 10 et en deçà du coin 44 par rapport au pion 3, et elle grimpe jusqu'au coin 43 au-dessus du pion 3.

Les différents éléments du dispositif de rattrapage de jeu coopèrent de la manière suivante. On définit deux sens de rotation S1, le sens actif qui est le sens habituel de rotation du réseau lors de la réalisation de mesure, et S2, le sens inactif qui n'est pas usuellement utilisé, du réseau 1 autour de son axe de rotation 21, qui sont respectivement les mêmes que les sens de rotation S4 et S3 du bras de rappel 4 autour de l'axe 22 du ressort 2. Dans l'exemple représenté, les sens S1 et S4 sont ceux des aiguilles d'une montre et les sens S2 et S3 sont trigonométriques.

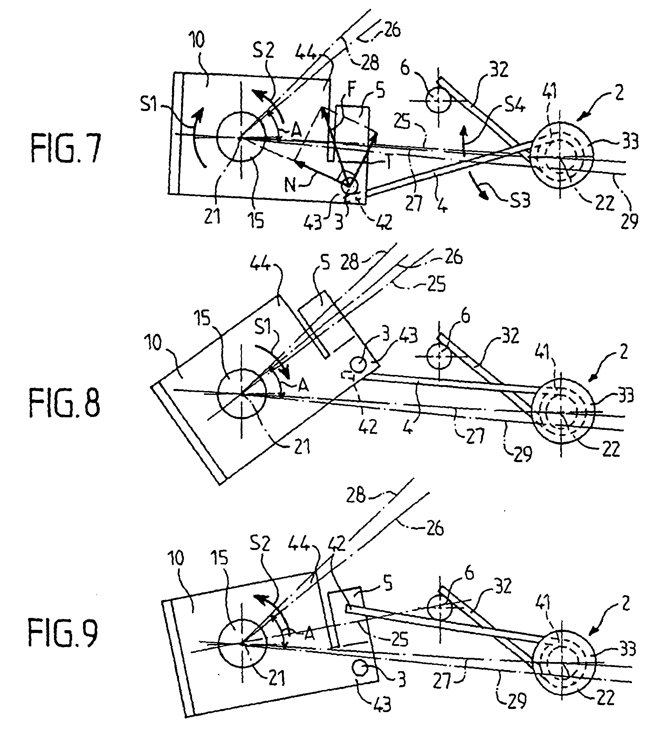

Lorsque le réseau 1 est orienté en dehors de la plage angulaire A, il n'est pas soumis à un rattrapage de jeu angulaire. En faisant tourner le réseau 1 dans le sens S1 de rotation, on finit par mettre le pion 3 en contact avec le bras de rappel 4 (figure 8). Cette position d'entrée dans la plage angulaire A coïncide avec la superposition de l'axe d'orientation 25 et d'un axe d'enclenchement 28 qui précède d'un angle faible (dans le sens S1), par exemple de l'ordre de 1° à 2°, la bissectrice 26. Le bras de rappel 4 exerce alors sur le pion 3 un couple antagoniste Cₐ qui s'oppose au couple moteur entraînant en rotation le réseau 1. Ce couple antagoniste Cₐ est non nul dès le contact entre le pion 3 et le bras de rappel 4, grâce à l'armement du ressort 2 au moyen de la butée 6.

En faisant tourner le réseau 1 dans le sens S1, on provoque la rotation du bras de rappel 4 dans le sens S3 par le contact avec le pion 3, L'extrémité 42 du bras de rappel 4 exerce alors sur le pion 3, une force F (figure 7) qui se décompose en une composante normale N dirigée vers l'axe 21 de rotation et en une composante tangentielle T, perpendiculaire à la composante normale N. La valeur du couple antagoniste Cₐ exercé par le bras de rappel 4 sur le pion 3 est proportionnelle à la composante tangentielle T. Cette composante tangentielle T dépend notamment du couple de rappel Cᵣ du ressort 2 et de la distance entre l'extrémité 41 du bras de rappel 4 et le point de contact du pion 3 avec l'extrémité 42. Les paramètres du dispositif de rattrapage de jeu comprenant notamment la longueur du bras de rappel 4 et la disposition du pion 3, sont choisis de manière à minimiser les variations du couple antagoniste Cₐ sur la plage angulaire A.

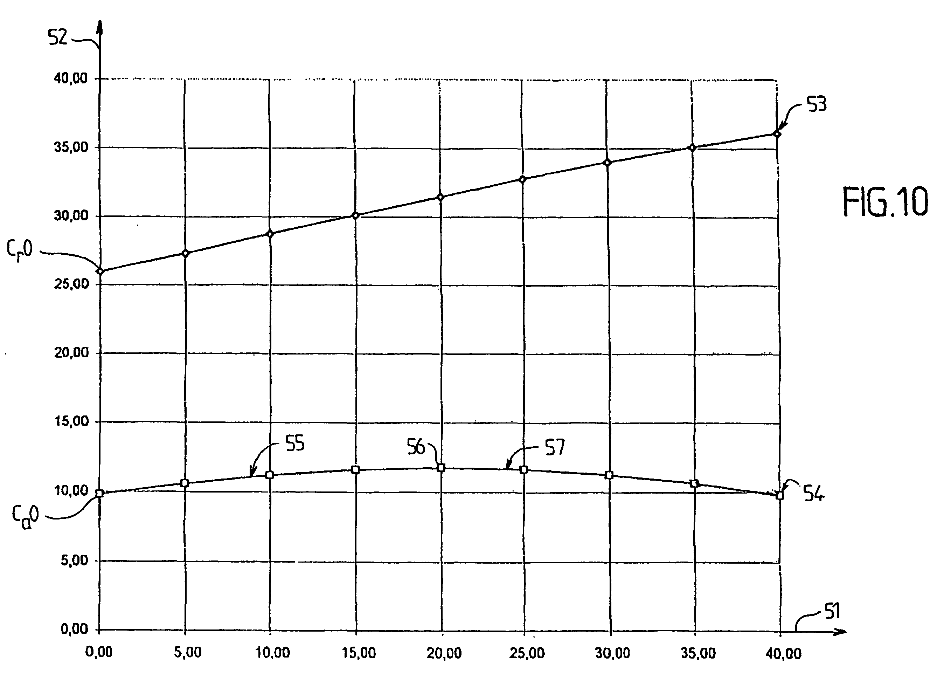

Dans l'exemple de réalisation représenté, les courbes 53 et 54 des variations respectives des couples de rappel Cᵣ et antagoniste Cₐ sur la plage angulaire A sont tracées sur la figure 10. La plage angulaire A ayant une ouverture de 40°, les courbes 53 et 54 sont représentées selon deux axes 51 et 52 donnant respectivement l'orientation du réseau 1, exprimée en degrés et initialisée à 0 pour l'entrée en contact du pion 3 avec le bras de rappel 4, et la valeur des couples en N.mm. On constate que le couple de rappel Cᵣ augmente continûment et de manière quasi linéaire sur la plage angulaire A, à partir d'une valeur initiale Cᵣ0 de plus de 39 %. Le couple antagoniste Cₐ, à partir d'une valeur initiale Cₐ0, subit une légère croissance (portion 55) avant d'atteindre un maximum 56 aux alentours de 20°, puis de décroître (portion 57). Les variations du couple antagoniste Cₐ autour de sa valeur initiale Cₐ0 ne dépassent pas 25 %.

Lorsque l'on continue de tourner le réseau 1 dans le sens S1, le pion 3 finit par parvenir jusqu'au bout de l'extrémité 42 du bras de rappel 4 et par s'en échapper lorsque l'axe d'orientation 25 coïncide avec un axe d'échappement 29. Le bras de rappel 4 est alors ramené en position initiale contre la butée 6 par le ressort de torsion 2. Les axes d'enclenchement 28 et d'échappement 29 définissent ainsi les limites de la plage angulaire A. La rampe 5 a une longueur suffisamment courte pour que, lors de l'échappement du pion 3, le bras de rappel 4 parvienne en deçà de la rampe 5 et ainsi ne se retrouve pas au-dessous d'elle.

Lorsque le réseau 1 est orienté en dehors de la plage angulaire A et que, à partir d'une telle position, on le fait tourner dans le sens S2, la rampe 5 rencontre le bras de rappel 4 et le fait passer par-dessus le pion 3 en lui faisant subir un mouvement vers le haut (sens S5). Une fois que l'extrémité 42 du bras de rappel 4 dépasse le coin 43 de l'équerre 10, le bras de rappel 4 est rappelé en position horizontale au moyen de la rondelle élastique 8 du flasque 7, et est ainsi de nouveau prêt à servir. Durant cette opération d'escamotage du pion 3 au moyen de la rampe 5, le bras de rappel reste appuyé contre la butée 6 et exerce sur l'équerre 10 un effort générant une valeur négligeable du couple antagoniste Cₐ.

Ainsi :
- le rattrapage de jeu angulaire n'est pas exercé en dehors de la plage angulaire A,
- le rattrapage de jeu angulaire n'est exercé sur la plage angulaire A que lorsque le réseau 1 y pénètre dans le sens S1, et
- le couple antagoniste Cₐ exercé dans la plage angulaire A par le dispositif de rattrapage de jeu présente de faibles variations.

## Revendications

1. Dispositif de rattrapage de jeu angulaire sur une plage angulaire (A) déterminée d'un organe optique (1) mobile en rotation par rapport à un bâti (12), **caractérisé en ce qu'**il comprend :
- une pièce de contact (3) solidaire dudit organe (1), et
- un bras de rappel (4) élastique ayant deux extrémités (41, 42), une première desdites extrémités (41) étant fixée au bâti (12) et la seconde extrémité (42) coopérant avec la pièce de contact (3) lorsque l'organe mobile (1) est orienté dans ladite plage angulaire (A), au moins lorsque l'organe mobile pénètre dans ladite plage angulaire dans un sens actif de rotation (S1), de telle sorte que le bras de rappel (4) exerce sur l'organe mobile (1) un couple antagoniste (Cₐ), et ladite seconde extrémité (42) ne coopérant pas avec la pièce de contact (3) lorsque l'organe mobile est orienté en dehors de ladite plage angulaire.

2. Dispositif selon la revendication 1, **caractérisé en ce que** l'organe mobile a un sens inactif de rotation (S2), ladite seconde extrémité (42) ne coopérant pas avec la pièce de contact (3) lorsque l'organe mobile pénètre dans ladite plage angulaire dans le sens inactif de rotation (S2).

3. Dispositif selon la revendication 2, **caractérisé en ce qu'**il comporte une butée d'armement (6) destinée à bloquer le bras de rappel (4) dans un sens (S4) de déplacement du bras (4) correspondant au sens inactif de rotation (S2) de l'organe mobile (1), de telle sorte que ledit couple antagoniste (Cₐ) est supérieur à une valeur de seuil dès que l'organe mobile pénètre dans ladite plage angulaire (A) dans le sens actif de rotation (S1).

4. Dispositif selon l'une des revendications 2 ou 3, **caractérisé en ce qu'**il comporte une rampe d'escamotage (5) solidaire de l'organe mobile (1) et destinée à coopérer avec le bras de rappel (4) lorsque l'organe mobile pénètre dans ladite plage angulaire (A) dans le sens inactif de rotation (S2), de manière à empêcher le bras de rappel (4) de coopérer avec la pièce de contact (3), tout en donnant au couple antagoniste (Cₐ) une valeur négligeable.

5. Dispositif selon la revendication 4, **caractérisé en ce que** la rampe d'escamotage (5) est montante et se prolonge au-dessus de la pièce de contact (3).

6. Dispositif selon l'une quelconque des revendications 1 à 5, **caractérisé en ce que** la pièce de contact (3) et le bras de rappel (4) sont tels que le couple antagoniste (Cₐ) présente une faible variation relative sur ladite plage angulaire (A), préférentiellement inférieure à 25 %.

7. Dispositif selon l'une quelconque des revendications précédentes, **caractérisé en ce que** le bras de rappel (4) est couplé par sa première extrémité (41) à un ressort de torsion (2).

8. Dispositif selon l'une quelconque des revendications précédentes, **caractérisé en ce que** la pièce de contact (3) est un pion cylindrique.

9. Dispositif selon l'une quelconque des revendications 1 à 8, **caractérisé en ce que** le bras de rappel (4) est couplé à des moyens de rappel vertical (7).

10. Dispositif selon la revendication 9, **caractérisé en ce que** les moyens de rappel vertical comportent un flasque (7) comprenant au moins un élément élastique (8), monté sur la première extrémité (41) du bras de rappel (4).

## Claims

1. A device for adjusting angular play on a predetermined angular range (A) of an optical element (1) mobile in rotation relative to a frame (12),
**characterised in that** it comprises:
- a contact piece (3) integral with the said element (1), and
- an elastic steady arm (4) with two ends (41, 42), whereas a first of the said ends (41) is fixed to the frame (12) and the second end (42) co-operates with the contact piece (3) when the mobile element (1) is oriented in the said angular range (A), at least when the mobile element enters the said angular range in an active rotational direction (S1), so that the steady arm (4) exerts on the mobile element (1) a counter-torque (Cₐ) and the said second end (42) does not co-operate with the contact piece (3) when the mobile element is oriented outside the said angular range.

2. A device according to claim 1, **characterised in that** the mobile element has an inactive rotational direction (S2), i.e. the said second end (42) does not co-operate with the contact piece (3) when the mobile element enters the said angular range in the inactive rotational direction (S2).

3. A device according to claim 2, **characterised in that** it comprises a reset stop (6) intended to block the steady arm (4) in one displacement direction (S4) of the arm (4) matching the inactive rotational direction (S2) of the mobile element (1), so that the said counter-torque (Cₐ) is greater than a threshold value as soon as the mobile element enters the said angular range (A) in the active rotational direction (S1).

4. A device according to any one of claims 2 or 3, **characterised in that** it comprises a retractable ramp (5) integral with the mobile element (1) and intended to co-operate with the steady arm (4) when the mobile element enters the angular range (A) in the inactive rotational direction (S2), in order to prevent the steady arm (4) from co-operating with the contact piece (3) while providing the counter-torque (Cₐ) with a negligible value.

5. A device according to claim 4, **characterised in that** the retractable ramp (5) is rising and extends above the contact piece (3).

6. A device according to any one of claims 1 to 5, **characterised in that** the contact piece (3) and the steady arm (4) are such that the counter-torque (Cₐ) exhibits a small relative variation on the said angular range (A), preferably smaller than 25%.

7. A device according to any one of the previous claims, **characterised in that** the steady arm (4) is coupled by its first end (41) with a torsional spring (2).

8. A device according to any one of the previous claims, **characterised in that** the contact piece (3) is a cylindrical stud.

9. A device according to any one of claims 1 to 8, **characterised in that** the steady arm (4) is coupled with vertical steady means (7).

10. A device according to claim 9, **characterised in that** the vertical steady means comprise a flange (7) having at least one elastic element (8), mounted on the first end (41) of the steady arm (4).

## Patentansprüche

1. Vorrichtung zur Verringerung des Winkelspiels in einem bestimmten Winkelbereich (A) eines optischen Elements (1), welches in Bezug auf ein Gehäuse (12) drehbeweglich ist, **dadurch gekennzeichnet, dass** sie umfasst:
- ein Kontaktstück (3), das mit dem Element (1) fest verbunden ist, und
- einen elastischen Rückstellarm (4), der zwei Enden (41, 42) aufweist, wobei ein erstes dieser Enden (41) an dem Gehäuse (12) befestigt ist und das zweite Ende (42) mit dem Kontaktstück (3) zusammenwirkt, wenn das bewegliche Element (1) in den Winkelbereich (A) gerichtet ist, zumindest wenn das bewegliche Element in den Winkelbereich in einer aktiven Drehrichtung (S1) eindringt, derart, dass der Rückstellarm (4) auf das bewegliche Element (1) ein Rückstellmoment (Cₐ) ausübt, wobei das zweite Ende (42) nicht mit dem Kontaktstück (3) zusammenwirkt, wenn das bewegliche Element nach außerhalb des Winkelbereichs gerichtet ist.

2. Vorrichtung nach Anspruch 1, **dadurch gekennzeichnet, dass** das bewegliche Element eine inaktive Drehrichtung (S2) aufweist, wobei das zweite Ende (42) nicht mit dem Kontaktstück (3) zusammenwirkt, wenn das bewegliche Element in der inaktiven Drehrichtung (S2) in den Winkelbereich eindringt.

3. Vorrichtung nach Anspruch 2, **dadurch gekennzeichnet, dass** sie einen Bewehrungsanschlag (6) aufweist, der dazu bestimmt ist, den Rückstellarm (4) in einer Verschieberichtung (S4) des Armes (4) zu blockieren, die der inaktiven Drehrichtung (S2) des beweglichen Elements (1) entspricht, derart, dass das Rückstellmoment (Cₐ) größer als ein Schwellenwert ist, sobald das bewegliche Element in der aktiven Drehrichtung (S1) in den Winkelbereich (A) eindringt.

4. Vorrichtung nach einem der Ansprüche 2 oder 3, **dadurch gekennzeichnet, dass** sie eine Einziehrampe (5) aufweist, die mit dem beweglichen Element (1) fest verbunden und dazu bestimmt ist, mit dem Rückstellarm (4) zusammenzuwirken, wenn das bewegliche Element in der inaktiven Drehrichtung (S2) in den Winkelbereich (A) eindringt, um den Rückstellarm (4) daran zu hindern, mit dem Kontaktstück (3) zusammenzuwirken, und gleichzeitig dem Rückstellmoment (Cₐ) einen vernachlässigbar kleinen Wert zu geben.

5. Vorrichtung nach Anspruch 4, **dadurch gekennzeichnet, dass** die Einziehrampe (5) ansteigend ist und sich über das Kontaktstück (3) hinaus fortsetzt.

6. Vorrichtung nach einem der Ansprüche 1 bis 5, **dadurch gekennzeichnet, dass** das Kontaktstück (3) und der Rückstellarm (4) derart beschaffen sind, dass das Rückstellmoment (Cₐ) eine geringe relative Veränderung in dem Winkelbereich (A) aufweist, vorzugsweise von unter 25 %.

7. Vorrichtung nach einem der vorstehenden Ansprüche, **dadurch gekennzeichnet, dass** der Rückstellarm (4) mit seinem ersten Ende (41) an eine Torsionsfeder (2) angekoppelt ist.

8. Vorrichtung nach einem der vorstehenden Ansprüche, **dadurch gekennzeichnet, dass** das Kontaktstück (3) ein zylindrisches Stück ist.

9. Vorrichtung nach einem der Ansprüche 1 bis 8, **dadurch gekennzeichnet, dass** der Rückstellarm (4) an vertikale Rückstellmittel (7) angekoppelt ist.

10. Vorrichtung nach Anspruch 9, **dadurch gekennzeichnet, dass** die vertikalen Rückstellmittel einen Flansch (7) aufweisen, der zumindest ein elastisches Element (8) aufweist, das an dem ersten Ende (41) des Rückstellarmes (4) befestigt ist.
